# EUROPÄISCHE PATENTSCHRIFT

(11) **EP 3 874 555 B1**
(45) Veröffentlichungstag und Bekanntmachung des Hinweises auf die Patenterteilung: **24.09.2025**
(21) Anmeldenummer: 19783024.3
(22) Anmeldetag: 07.10.2019
(51) Int. Cl.: H01M 8/2404, B32B 3/00, H01M 10/04, H01M 10/0585, H01M 10/42

(54) **VERFAHREN ZUR HERSTELLUNG EINES STAPELAUFBAUS**
METHOD OF MANUFACTURING A STACKED STRUCTURE
PROCEDE DE FABRICATION D'UNE STRUCTURE EMPILÉE

(30) Priorität: 29.10.2018 DE 102018218487
(43) Veröffentlichungstag der Anmeldung: 08.09.2021
(73) Patentinhaber: Robert Bosch GmbH, 70442 Stuttgart (DE)
(72) Erfinder: DIESSNER, Christian, 75417 Mühlacker-Mühlhausen (DE); WEILAND, Tobias, 70188 Stuttgart (DE)
(86) Internationale Anmeldenummer: PCT/EP2019/077023
(87) Internationale Veröffentlichungsnummer: WO 2020/088887

(56) Entgegenhaltungen:
- WO-A1-2018/059967
- WO-A2-2019/099642
- KR-A- 20120 117 634

## Beschreibung

### Technisches Gebiet

Die Erfindung bezieht sich auf ein Verfahren zur Herstellung eines Stapelaufbaus aus folien- oder blattförmigen Einzellagen. Des Weiteren bezieht sich die Erfindung auf die Verwendung des Verfahrens zur Herstellung eines Elektrodenstapels für eine Batteriezelle oder zur Herstellung eines Brennstoffzellenstapels..

### Stand der Technik

JP 2011-086506 offenbart eine Herstellungsvorrichtung für geschichtete Batterien, mit der ein kontinuierliches Kathodenmaterial, ein kontinuierliches Anodenmaterial und ein kontinuierliches Separatormaterial kontinuierlich verarbeitet werden und kontinuierlich eine Kathode, eine Anode und ein Separator entlang bestimmter Linien geformt werden. Die Seiten einer jeden Bruchlinie können getrennt werden. Die abgetrennten Materialien werden auf einem Stapel aufgestapelt. Bruchlinien der einzelnen Rohmaterialien liegen übereinander. Mittels einer Schneideinrichtung werden entlang der Bruchlinien eine Anzahl von Batteriematerialien gefertigt.

US 2005/0286209 offenbart die Verbindung eines gestanzten Films mit einem weiteren Film mit einem gestanzten Muster, welches zumindest eine Trennlinie definiert. Das gestanzte Muster hat zumindest in eine Richtung mehrere Trennlinien, die sich parallel zueinander erstrecken oder weist verschiedene Trennlinien auf, die senkrecht zueinander verlaufen.

Die einzelnen Filme lassen sich stapeln und bilden elektrochemische Komponenten. Bei den gestanzten Filmen ist das Stanzmuster ähnlich einer Perforation; das gestanzte Muster bestimmt die Schneidkanten für eine nachfolgende Trennung durch Schneiden oder auf eine andere Weise der Komponenten an solchen Filmen, die miteinander laminiert oder auf eine andere Art und Weise miteinander verbunden sind.

US 2012/0210549 offenbart ein Verfahren zur Herstellung einer elektrischen Doppelschichtzelle, wobei zunächst erste und zweite Elektrodenbögen durch Drucken eines Elektrodenmaterials auf einen leitfähigen Bogen hergestellt werden. Die ersten und zweiten Elektrodenbögen werden miteinander verbunden und bilden eine Elektrodeneinheit. Die ersten und zweiten Elektrodenbögen werden gestapelt, wobei zwischen diesen ein Separator eingefügt wird, derart, dass die Anzahl der ersten und zweiten Elektroden einander überlappen. Die ersten und zweiten Elektrodenbögen, die übereinander gestapelt sind, werden geschnitten.

Die Druckschrift KR 2012 0117634 A offenbart ein Verfahren zur Herstellung einer Elektrode für eine Batteriezelle aus blattförmigen Einzellagen.

Die Druckschrift WO 2018/059967 A1 offenbart ein Verfahren zur Herstellung eines Elektrodenstapels für eine Batteriezelle aus blattförmigen Einzellagen.

Batteriezellen wie beispielsweise Lithium-Ionen-Zellen sind schichtweise aufgebaut. Die einzelnen Schichten bestehen aus Anoden- und Kathodenfolien sowie einem sie trennenden Separator. Der Aufbau der Batteriezellen ist je nach Form der Batteriezellen in ihrem Anwendungsbereich unterschiedlich. Der Aufbau entsprechender Batteriezellen kann durch Einzelblattstapeln, Flachwickeln, Erzeugung eines Z-Falzes sowie die Erzeugung eines Z-Falzes des Separators und anschließendes Einlegen von einzelnen Elektroden vorgenommen werden. Heute werden vorrangig das Flachwickeln und das Einzelblattstapeln zur Herstellung von Elektrodenstapeln eingesetzt. Das Flachwickeln ist nicht optimal hinsichtlich seiner Volumenausnutzung. Die Volumenausnutzung stellt eine wesentliche Kennzahl einer Batteriezelle dar und gibt Aufschluss über die Energie und Leistungsdichte der Zelle. Des Weiteren ist das Flachwickeln nicht optimal hinsichtlich der Lebensdauer, da es zu einem "Atmen" des Wickels beim Laden und Entladen kommt, welcher Spannungen und eine undefinierte Verformung nach sich ziehen kann. Des Weiteren entstehen Probleme bei der Kühlung aufgrund nicht plan aufeinanderliegender Schichten, die den Wärmetransport nach außen darstellen.

Das Einzelblattstapeln bietet zwar Vorteile, ist aber hinsichtlich der Fertigung in Großserienverfahren relativ aufwändig, aufgrund der Einhaltung enger Positioniertoleranzen einzelner Schichten zueinander. Des Weiteren müssen auch beim Einzelblattstapeln relativ hohe Taktzeiten erzielt werden. Das Stapeln entlang eines seitlichen mechanischen Anschlags ist nicht möglich, da die einzelnen Lagen unterschiedliche Größe aufweisen; so ist die Separatorschicht hinsichtlich der Abmessungen größer als die Anode, die hinsichtlich ihrer Abmessungen wiederum größer als die Kathodenlage ist. Das Einzelblattstapeln bietet eine freiere Formgestaltung der Batteriezelle, es lassen sich asymmetrische Konturen fertigen. Das Einzelblattstapeln hat ferner Vorteile hinsichtlich des Einsatzes neuerer Werkstoffe, beispielsweise dünnerer Folien und spröderer Materialien.

Auch Brennstoffzellenstapel für Brennstoffzellen und Lithium-Batteriezellenstapel werden aus einem Stapel dünner unterschiedlich beschaffener Bauteile gefertigt. Die Einzelbauteile liegen typischerweise vereinzelt vor und werden in Stapelprozessen, beispielsweise einer Roboterkinematik im Pick & Place-Betrieb aufeinandergestapelt. Typischerweise sind bei diesen Produkten die Einzellagen in ihrer Beschaffenheit verschieden. Dies bedeutet, dass die Einzellagen unterschiedlich groß, aus unterschiedlichem Material gefertigt werden und eine voneinander abweichende Außenkontur aufweisen. Dies verursacht Schwierigkeiten hinsichtlich der Stapelung des Rohmaterials und der sich daran anschließenden Verarbeitung der Außenkontur des gebildeten Stapels durch Schneidprozesse. Dies bedeutet, dass typischerweise zuerst die einzelnen Bauteile von einer Bahnware oder Bogenware abgetrennt, das überschüssige Material entfernt wird, wonach die Einzelelemente vereinzelt und danach mit geeigneten Verfahren gestapelt werden.

Das Trennen und anschließende Aufstapelns hat unter anderem folgende Nachteile: Je nach Beschaffenheit hinsichtlich Dicke, Flexibilität, Adhäsivität, elektrostatischer Aufladung und Porosität der einzelnen Bauteile, d.h. der Einzellagen, ist das automatisierte Handhaben sehr herausfordernd. Die Materialien können knicken, falten sich oder haften an sich selbst, was auf Selbstklebeeffekte und elektrostatische Effekte zurückzuführen ist. Des Weiteren sind die eingesetzten Materialien zu labil, um als Einzellage definiert gehandhabt werden zu können. Des Weiteren sind die Materialien zu empfindlich, um sie im Funktionsbereich zu berühren, beispielsweise können Beschädigungen durch eine Greiftechnik auftreten.

Eine kontinuierliche Handhabung hätte Vorteile hinsichtlich der Prozesskomplexität und Robustheit hinsichtlich der Genauigkeit und/oder der Geschwindigkeit. Beim Aufeinanderstapeln von Bauteilen, beispielsweise mittels eines Pick & Place-Zyklus eines Roboters und eines anderen Handhabungsgerätes, umfasst etwa die Hälfte der Arbeitszyklen nicht wertschöpfende Leerfahrten.

Insgesamt gesehen stellen sich bisherige Herstellungsprozesse von Stapeln aus sehr dünnen Einzellagen, sei es für Elektrodenstapel für Batteriezellen, sei es für Brennstoffzellenstapel für Brennstoffzellen sehr unbefriedigend dar, so dass Abhilfe geschaffen werden muss.

### Darstellung der Erfindung

Der erfindungsgemäß vorgeschlagenen Lösung folgend, wird ein Verfahren zur Herstellung eines Stapelaufbaus einer Batteriezelle oder einer Brennstoffzelle aus folien- oder blattförmigen Einzellagen vorgeschlagen, wobei zumindest nachfolgende Verfahrensschritte durchlaufen werden:
a) Erzeugen von Einzellagen mit einer Außenkontur durch Perforation in zumindest einer Perforationsrichtung in einem bahnförmigen Material für jeweils eine der Einzellagen,
b₁) Ausführung der Perforation derart, dass als Sollbruchstellen dienende Abrisskanten von Perforationsstegen innerhalb der Außenkontur liegen,
b₂) Ausführung der Perforation derart, dass durch diese temporäre Stützstrukturen zwischen Einzellagen im jeweiligen bahnförmigen Material gebildet werden,
c₁) Abtrennung einzelner, identischer Einzellagen an den innerhalb der Außenkontur eine Einzellagen liegenden Sollbruchstellen voneinander
   oder
c₂) Abtrennung von Bahnstücken/Bögen aus mehreren identischen, über temporäre Stützstrukturen miteinander verbunden identischer Einzellagen und
d) Durchführung eines Stapelvorgangs von Bahnstücken/Bögen und Abtrennen der temporären Stützstrukturen nach Beendigung des Stapelvorganges an der Perforation.

In Weiterbildung des erfindungsgemäß vorgeschlagenen Verfahrens werden die bahnförmigen Materialien im Bereich von Abrisskanten der Perforationsstege mit einer Vorprägung versehen und/oder sind in diesen Bereichen in einer lokal verringerten Materialdicke ausgeführt. Diese Maßnahmen haben zur Folge, dass sich beim Trennen der Einzellagen Stegreste bilden, die in vorteilhafter Weise nicht über die Außenkontur einer Einzellage, sei es eine Kathode, sei es eine Anode für einen Elektrodenstapel, überstehen.

Der erfindungsgemäß vorgeschlagenen Lösung weiter folgend, können einzelne identische Einzellagen, erzeugt gemäß Verfahrensschritt c₁) durch Zugkrafteinleitung auseinandergezogen werden. Dadurch entfällt das Erfordernis einer Schnittoperation; des Weiteren entfällt das Erfordernis des Vorhaltens einer Schneideinrichtung.

Die Ausbildung temporärer Stützstrukturen gemäß des erfindungsgemäß vorgeschlagenen Verfahrens ermöglicht, dass beispielsweise Kontaktfahnen von Einzellagen von diesen temporären Stützstrukturen umgeben sind, so dass die Kontaktfahnen - um ein Beispiel zu nennen - gegen Beschädigung bei deren Handhabung oder bei einem Stapelvorgang geschützt sind.

Der Transport der bahnförmigen Materialien für die erste, zweite oder dritte Einzellage kann über einen Lochrand erfolgen, der durch eine Perforation innerhalb der Randbereiche des bahnförmigen Materials ausgebildet und über die Perforation mit dem bahnförmigen Material verbunden ist. Auch hier kann nach dem Finishing, aufgrund der Perforation der nicht mehr benötigte Lochrand von der fertigen Einzellage oder einem aufgebauten Stapel seitlich abgezogen werden, ohne dass es einer Schneidoperation bedarf.

Für den Fall, dass mit dem erfindungsgemäß vorgeschlagenen Verfahren ein Stapelaufbau vorgenommen wird, und eine Batteriezelle hergestellt wird, umfasst der Stapelaufbau in abwechselnder Abfolge erste Einzellagen, die als Kathoden beschaffen sind, zweite Einzellagen, die Separatoren darstellen sowie dritte Einzellagen, die Anoden sind. Die Dicke der Einzellagen liegt im Bereich von 5 µm bis zu ca. 200 µm. So liegt die Dicke von Anodenmaterial inklusive Aktivmaterial zwischen 5 µm und 200 µm, die Dicke von Separatormaterial beträgt ca. 10 µm bis 20 µm, während Kathodenmaterial inklusive des Aktivmaterials in der Regel eine Dicke zwischen 10 µm und 200 µm hat.

Für den Fall, dass mittels des erfindungsgemäß vorgeschlagenen Verfahrens ein Stapelaufbau für eine Brennstoffzelle erfolgt, werden durch die erste Einzellage beispielsweise ein Stromsammler, durch die zweite Einzellage beispielsweise eine Bipolarplatte und/oder über die dritte Einzellage eine Membran-Elektroden-Einheit (MEA = Membrane Electrode Array) gebildet. Die Einzellagen, aus denen Brennstoffzellenstapel aufgebaut werden, habe eine Dicke, die zwischen 0,2 mm bis ca. 1 mm liegt. Beim erfindungsgemäß vorgeschlagenen Verfahren werden die temporären Stützstrukturen beim Herstellungsprozess, sei es für eine Batteriezelle, sei es für eine Brennstoffzelle im Laufe des Herstellungsprozess zu einem möglichst späten Zeitpunkt abgetrennt. Dadurch besteht die Möglichkeit, die Handhabung der einzelnen Folien und blattförmig ausgeführten Einzellagen einerseits erheblich zu verbessern und andererseits diese, beispielsweise hinsichtlich im Randbereich abstehender Kontaktfahnen, vor Beschädigungen während der Handhabung zu schützen.

Des Weiteren bezieht sich die Erfindung auf die Verwendung zur Herstellung eines Elektrodenstapels für eine Batteriezelle oder zur Herstellung eines Brennstoffzellenstapels für eine Brennstoffzelle.

### Vorteile der Erfindung

Durch die erfindungsgemäß vorgeschlagene Lösung besteht die Möglichkeit, die Einzellagen nicht aus in Bahnform vorliegendem Rohmaterial fertig auszuschneiden, sondern die Kontur der Einzellagen in dieses zu perforieren. Dadurch sind zwar einerseits die Einzellagen nach wie vor hinsichtlich ihrer Position im bahnförmigen Material definiert, andererseits sind die Einzellagen weiter mechanisch mit dem Rohmaterial verbunden und liegen nicht als einzelne blatt- oder folienförmige Elemente vor, so dass deren Handhabung erheblich vereinfacht wird. Wird mit diesen Einzellagen ein Stapel gebildet, ist es möglich, ohne weiteren Schneidprozess die Einzellagen aus dem Rohmaterialstapel zu lösen, obwohl die Einzelblätter beispielsweise für eine Batteriezelle, Anode, Kathode und Separator, jeweils eine unterschiedliche Außenkontur aufweisen.

Durch den erfindungsgemäß vorgeschlagenen Einsatz des Perforationsverfahrens kann der Perforationssteg innerhalb einer Außenkontur positioniert werden, wodurch beispielsweise die Kurzschlussgefahr bei der Produktion von Elektroden minimiert ist. Dadurch, dass der Perforationssteg nach innen versetzt ist in Bezug auf die Außenkontur, ist ein Überstehen eines beim Abriss verbleibenden Stegrestes über die Außenkontur der jeweiligen Einzellage und damit des Stapels ausgeschlossen. Aufgrund des Umstandes, dass Perforationsstege vorgeprägt sind, ist die Lage der späteren Abrisskante definiert; ein Vorprägen ermöglicht des Weiteren eine Reduzierung der Streckung des Materials, d.h. eine plastische Verformung im Bereich des Perforationssteges während des Abreißens. Das erfindungsgemäß vorgeschlagene Verfahren eignet sich in vorteilhafter Weise zur Herstellung von Produkten, in der folienartige Werkstoffe - insbesondere mit unterschiedlichen Außenkonturen - gestapelt werden. Dies betrifft beispielsweise Primär-und Sekundärbatterien, unabhängig von der Zellchemie sowie Brennstoffzellen. Bei der Herstellung von Brennstoffzellen weisen die Einzellagen typischerweise eher dickere Materialstärken auf, es handelt sich vornehmlich um dünnere Bleche anstatt Folie; ferner weisen Brennstoffzellenstapel in der Regel eine höhere Anzahl von Einzellagen je Stack im Vergleich zu einem Elektrodenstapel einer Batteriezelle auf. Bei der Herstellung von Brennstoffzellen unter Anwendung des erfindungsgemäß vorgeschlagenen Verfahrens, kann durch das Verteilen der Zeit für das Feinpositionieren auf mehrere Stacks in Summe deutlich mehr Zeit bei der Herstellung von Brennstoffzellenstapel eingespart werden.

In vorteilhafter Weise wird durch das erfindungsgemäß vorgeschlagene Verfahren der Teiletransport vereinfacht, indem die vollständige Trennung der Einzelteile zu einem möglichst späten Zeitpunkt erfolgt. Bei der erfindungsgemäß vorgeschlagenen Lösung sind Trennvorgänge, die sonst durch Schneiden oder Stanzen vorgenommen werden, von Einzellagen aus bahnförmigem Material durch einen Perforationsprozess ersetzt. Das Trennen ist in der Fertigungsprozesskette bei der Herstellung von Stapelaufbauten für Elektrodenstapel oder für Brennstoffzellenstapel auf einen möglichst späten Zeitpunkt verschoben. Dadurch kann das Handling der Einzellagen, da diese noch durch temporäre Stützstrukturen miteinander verbunden sind, bis zum vollständigen Trennen erheblich vereinfacht werden. Das vollständige Trennen der Einzellagen aus dem bahnförmigen Material wurde beispielsweise aus einem bogenförmig vorliegenden Material erfolgt ohne Einsatz eines Schneidgerätes durch einfaches Abreißen der temporären Stützstrukturen oder durch ein Auseinanderziehen der beiden noch über eine Perforation verbundenen Einzelelemente.

Des Weiteren ist darauf hinzuweisen, dass der Perforationsprozess, da kein vollständiges Durchschneiden des entsprechenden Materials erfolgt, wesentlich schneller vonstatten geht und eine erheblich günstigere Technologie darstellt als die komplette Durchschneideoperation. Durch die Wahl des Perforationsverfahrens besteht die Möglichkeit, an den Einzellagen eines Stapels temporäre Stützstrukturen anzubringen. Diese ermöglichen es, filigrane Strukturen, beispielsweise Kontaktfahnen an Kathodenlagen und Anodenlagen, zu schützen und somit eine Beschädigung beim Handhaben oder Stapeln zu vermeiden. Die temporären Stützstrukturen werden nach Beendigung des Stapelvorgangs aufgrund der Perforation an in dieser ausgebildeten Sollbruchstellen, d.h. den Perforationsstegen einfach abgezogen.

### Kurze Beschreibung der Zeichnung

Anhand der Zeichnung wird die Erfindung nachstehend eingehender beschrieben.

Es zeigt:
- Figur 1: einen Stapelaufbau einer Batteriezelle,
- Figur 2: eine Explosionsdarstellung eines Brennstoffzellenstapels,
- Figur 3, 3.1 und 3.2: einen Trennvorgang von Einzellagen,
- Figur 4.1 - 4.6: einen optimierten Perforationsprozess,
- Figur 5: einen Stapelaufbau,
- Figur 6.1 - 6.3: ein Handhabungsverfahren für Einzellagen,
- Figur. 7.1 - 7.3: ein optimiertes Handhabungsverfahren für Einzellagen,
- Figur 8: ein bahnförmiges Material für eine Bipolarplatte einer Brennstoffzelle.

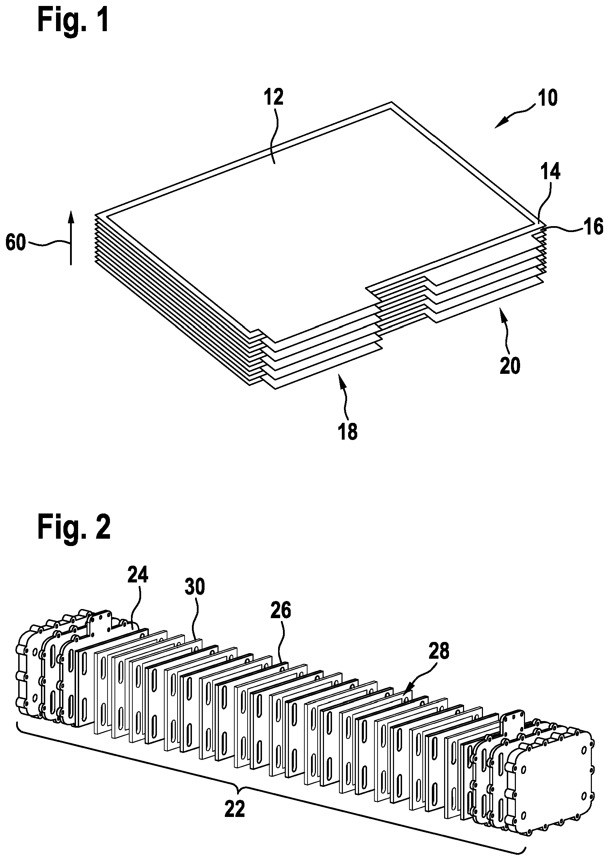

Der Darstellung gemäß Figur 1 ist ein Stapelaufbau 60 - hier für eine Batteriezelle - zu entnehmen.

Aus Figur 1 geht eine gestapelte Anordnung von einer ersten Einzellage 12, einer zweiten Einzellage 14 und einer dritten Einzellage 16 hervor. Bei der ersten Einzellage 12 handelt es sich um eine folien- oder blattförmig ausgebildete Kathode, bei der zweiten Einzellage 14 um ein folien- oder blattförmig ausgebildetes Separatormaterial, während die dritte Einzellage 16 eine Anode des Elektrodenstapels 10 darstellt. Wie Figur 1 weiter zeigt, liegen an der Stirnseite des Elektrodenstapels 10 gemäß der Darstellung in Figur 1 einzelne erste Kontaktfahnen 18 der ersten Einzellagen 12, d.h. der Kathoden sowie zweite Kontaktfahnen 20 der dritten Einzellagen 16, die Anoden übereinander.

Figur 2 zeigt in explosionsartiger Darstellung einen Brennstoffzellenstapel 22, der aus einer Vielzahl im Wesentlichen blatt- oder schichtförmiger Einzelelemente besteht. Der Brennstoffzellenstapel 22 umfasst unter anderem mindestens einen Stromsammler 24, mindestens eine Bipolarplatte 26, mindestens eine Membran-Elektroden-Einheit 28 sowie eine Anzahl von Dichtungen sowie in den Endbereichen jeweils eine Klemmplatte, über welche die gesamten schichtförmigen Einzellagen zu einem Stack einer Brennstoffzelle zusammengefügt werden können.

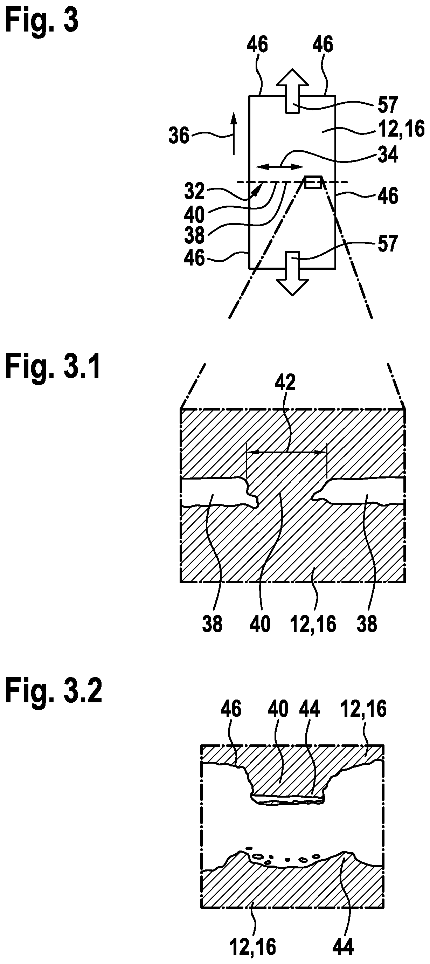

In der Figurensequenz der Figuren 3, 3.1 und 3.2 ist ein schneidoperationsfreier Trennvorgang von Einzellagen dargestellt.

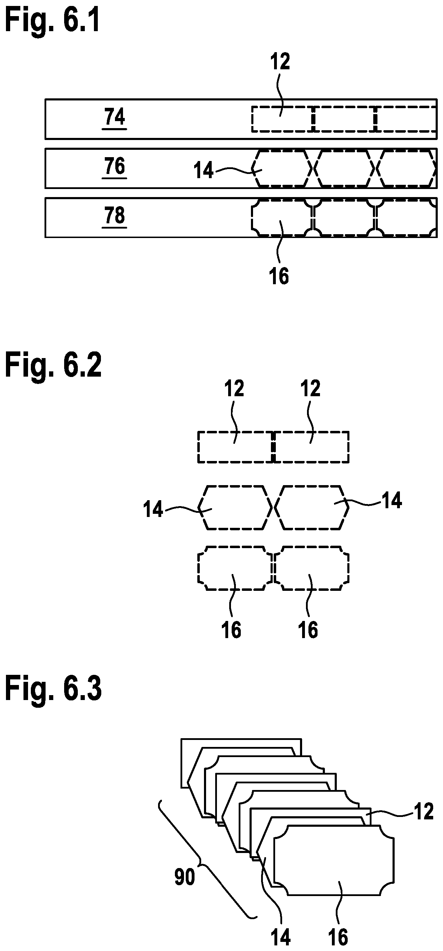

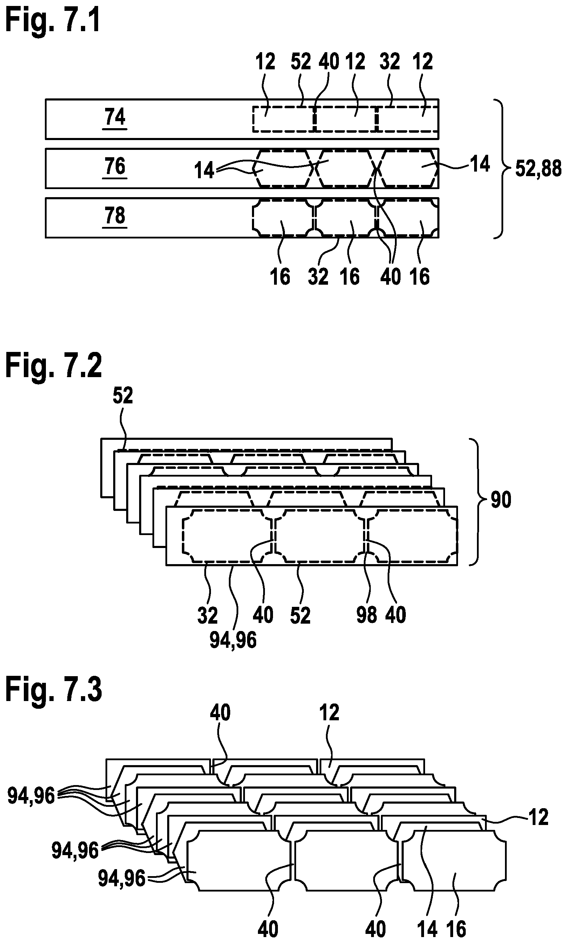

In einem in den Figuren 6.1 bis 6.3 bzw. 7.1 bis 7.3 dargestellten bahnförmigen Material werden in einem Perforationsprozess Perforationen 32 in eine erste Perforationsrichtung 34 erzeugt. Darüber hinaus können die Perforationen 32 zusätzlich zur ersten Perforationsrichtung 34 auch in eine zweite Perforationsrichtung 36 verlaufen. Durch die Perforationen 32 wird eine Außenkontur 46 der Einzellage 12 bzw. 16 definiert. Die Perforationen 32 umfassen einen Perforationsschnitt 38, vergleiche Darstellung gemäß Figur 3.1 sowie einen Perforationssteg 40, der eine Sollbruchstelle darstellt. Figur 3.1 zeigt einen vergrößerten Bereich der Perforation 32 zwischen zwei noch durch die Perforation 32 miteinander verbundenen ersten Einzellagen 12 bzw. dritten Einzellagen 16. Wie Figur 3.1 zeigt, wird durch die Perforation 32 eine Abfolge von Perforationsschnitten 38 und Perforationsstegen 40 erzeugt, die sich in die erste Perforationsrichtung 34 erstrecken. Eine Stegbreite 42 der Perforationsstege 40 liegt in der Größenordnung von etwa 100 µm bei einer Kupferfolie, deren Dicke ca. 20 µm beträgt. Die Stegbreite 42 ist stark materialabhängig. Die Stegbreite 42 und die Anzahl der Perforationsstege 40 bestimmen, wie leicht eine einzelne Lage aus dem Vollmaterial zu lösen ist. Sie ist so zu wählen, dass Handhabung und Transport beschädigungsfrei möglich sind, das Herauslösen jedoch eine angemessen niedrige Kraft erfordert.

Würde in der Darstellung gemäß Figur 3.2 beispielsweise wie in Figur 3 dargestellt, eine Zugkrafteinleitung 57 in die über die Perforation 32 miteinanderverbundenen Einzellagen 12 bzw. 16 erfolgen, so käme es zu einem Abriss des Perforationssteges 40 und sich ausbildender Stegreste 44, die auf der einen Seite der ersten Einzellage 12 und auf der dieser gegenüberliegenden anderen Seite der ersten Einzellage 12 liegen. Wie Figur 3.2 zu entnehmen ist, erstreckt sich einer der Stegreste 44 mit einem Überstand 48 über die Außenkontur 46.

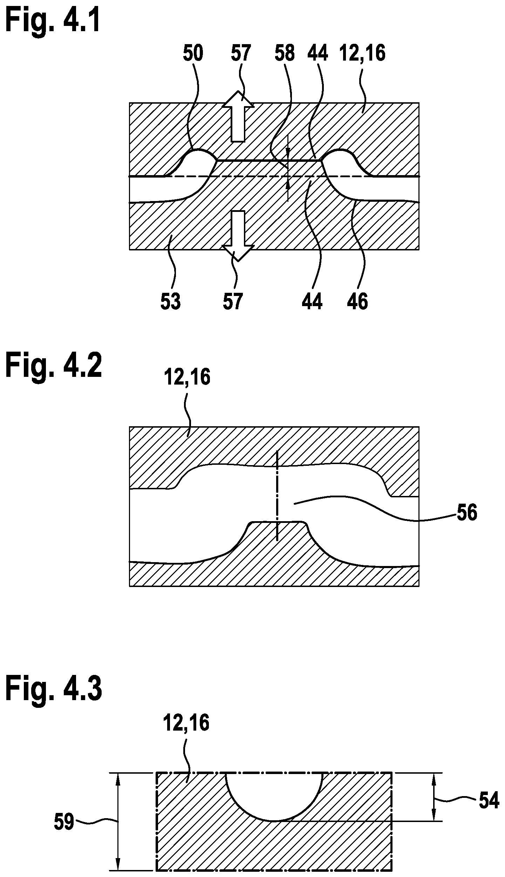

Die Figurensequenz der Figuren 4.1 bis 4.6 zeigt einen optimierten Perforationsprozess.

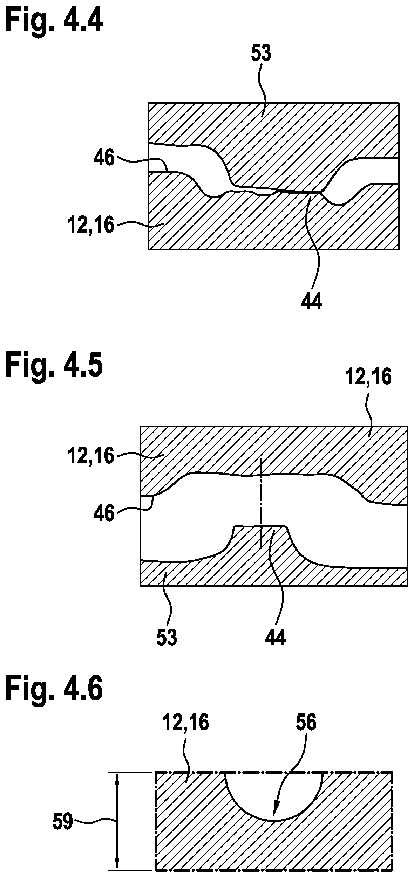

Wie der Figurensequenz der Figuren 4.1, 4.2 und 4.3 entnommen werden kann, ist in dem bahnförmigen Material 74, 76, 78 (vergleiche Darstellung gemäß der Figuren 6.1 bis 6.3 und 7.1 bis 7.2) im Bereich der Perforationsstege 40 eine Materialschwächung ausgeführt. Diese Materialschwächung liegt beispielsweise - wie in Figur 43 dargestellt - in einer lokal verringerten Materialdicke 54. Im Vergleich zur ursprünglichen Materialdicke 59 beträgt die lokal verringerte Materialdicke 54 beispielsweise die Hälfte der ursprünglichen Materialdicke 59. Gegenüber einer herkömmlich ausgebildeten geraden Perforationslinie erfolgt ein Versetzen des Perforationssteges 40 um einen Versatz 58 hinter die Außenkontur 46 der ersten Einzellage 12 bzw. der dritten Einzellage 16. Bei Zugkrafteinleitung 57 wird ein Materialrest 53 abgezogen, wobei ein Stegrest 44 im Bereich der Abrisskante 50 innerhalb der Außenkontur 46 verbleibt, d.h. nicht über die Außenkontur 46 der bearbeiteten ersten Einzellage 12 bzw. dritten Einzellage 16 in gestapeltem Zustand hervorsteht. Da im Bereich der sich später ausbildenden Abrisskante 50 die Perforation 32 verläuft und dort das Material in lokal verringerter Materialdicke 54 vorliegt, bildet sich der Stegrest 44 im Abfallmaterial 43, während der gegenüberliegende Stegrest 44 innerhalb der Außenkontur 46 der ersten Einzellage 12 bzw. der dritten Einzellage 16 verbleibt. Figur 4 ist zu entnehmen, dass der Materialrest 53 einen größeren Anteil des Stegrestes 44 umfasst und innerhalb der Außenkontur 46 der ersten Einzellage 12 bzw. der dritten Einzellage 16 hinter dieser zurück bleibt. Der Stegrest 44 steht eben nicht über die Außenkontur 46 über. Neben einer wie im Zusammenhang mit den Figuren 4.1, 4.2 und 4.3 beschriebenen lokal verringerten Materialdicke 54, kann im Rohmaterial der ersten und zweiten Einzellagen 12 bzw. 16 - die hier beispielhaft genannt seien - auch eine Vorprägung 56 ausgebildet werden. Diese Vorprägung stellt ebenfalls - vergleiche Darstellung gemäß Figur 4.6 - eine Materialschwächung des Rohmaterials dar. Die Vorprägung 56 kann beispielsweise so ausgebildet sein, dass durch diese die Position der späteren Abrisskante 50 definiert ist. Aufgrund der Vorprägung 56 des Perforationssteges 40, welcher die spätere Sollbruchstelle darstellt, kann ebenfalls erreicht werden, dass ein größerer Stegrest 44 des Perforationssteges 40 im Materialrest 53 verbleibt, wohingegen aufgrund der Vorprägung 56 durch die reduzierte Streckung des Materials und Ausbildung einer plastischen Verformung im Bereich des Perforationssteges 40 während des Abreißvorgangs ein weitaus geringerer Teil des Stegrestes 44 in der ersten Einzellage 12 bzw. der zweiten Einzellage 14 verbleibt und zwar innerhalb der Außenkontur der durch die Perforation 32 vorgegebenen Außenkontur 46. Figur 4.6 ist in schematischer Weise eine derartige Vorprägung 56 im Rohmaterial zu entnehmen, aus dem die erste Einzellage 12 bzw. die dritte Einzellage 16 gefertigt werden.

Aus Figur 4.6 geht hervor, dass die Vorprägung 56 ein halbzylindrisches Aussehen aufweist. Selbstverständlich kann die Vorprägung 56 auch durch andere Geometrien im Ausgangsmaterial, beispielsweise einem bahnförmigen Material 74, 76, 78, vergleiche Darstellungen der Figuren 6.1 bis 6.3 bzw. 7.1 bis 7.3 ausgeführt sein.

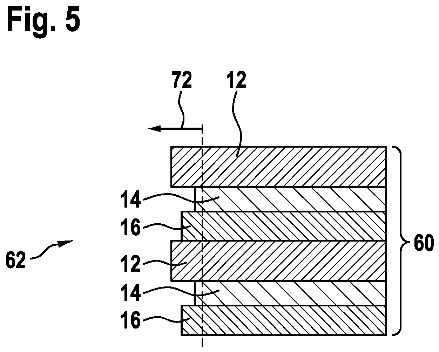

Der Darstellung gemäß Figur 5 ist in schematischer Weise ein Stapelaufbau 60 zu entnehmen, an dessen Stapelrand 72 unterschiedliche Überstände vorliegen. Im Stapelaufbau 60 gemäß der schematischen Wiedergabe in Figur 5 sind eine erste Einzellage 12, eine zweite Einzellage 14 und eine dritte Einzellage 16 in alternierender Abfolge übereinandergestapelt. Die Einzellagen 12, 14, 16 sind hinsichtlich ihrer Beschaffenheit verschieden, d.h. die Einzellagen 12, 14, 16 sind unterschiedlich groß und/oder aus unterschiedlichem Material gefertigt und haben eine voneinander abweichende Außenkontur. Dies macht es unmöglich, zuerst die Einzellagen 12, 14, 16 zu stapeln und danach eine Außenkontur des Stapels mittels einer Schneidoperation herzustellen.

Ein derartiger Stapelaufbau 60 erfordert, dass zunächst die einzelnen Einzellagen 12, 14, 16 aus einer Bahnware und einer Bogenware getrennt würden, danach das überschüssige Material entfernt würde, anschließend die Einzelelemente vereinzelt würden und dann mit einem geeigneten Stapelverfahren aufeinandergestapelt würden. Ein derartiges Vorgehen ist in der Darstellung gemäß der Figuren 6.1, 6.2 und 6.3 dargestellt. Gemäß dieser Figurensequenz werden die Einzellagen 12, 14, 16 aus bahnförmigem Material, d.h. dem ersten Bahnmaterial 74 für die erste Einzellage 12, dem zweiten Bahnmaterial 76 für die zweite Einzellage 14 sowie dem dritten Bahnmaterial 78 für die dritte Einzellage 16 gefertigt. Zwar lassen sich die einzelnen Außenkonturen 46 der Einzellagen 12 bis 14 im Wege der Perforation herstellen, jedoch ist deren Handhabung, vergleiche Darstellung gemäß Figur 6.2, d.h. Ausführung eines Trennvorganges 88, ein anschließender Stapelvorgang 90 aufgrund der unterschiedlichen Geometrien hinsichtlich der Außenkonturen 46 der einzelnen Einzellagen 12, 14, 16 herausfordernd. Je nach der Beschaffenheit hinsichtlich Dicke, Flexibilität, Adhäsivität, elektrostatischer Aufladung, Porosität der einzelnen Einzellagen 12, 14, 16, ist das automatisierte Handhaben herausfordernd bis unmöglich. Die Materialien können knicken, sie falten sich oder haften aneinander an aufgrund von Selbstklebung oder Elektrostatik; des Weiteren sind die Materialien zu labil, um als Einzellagen 12, 14, 16 definiert gehandhabt zu werden. Ferner sind die Materialien zu empfindlich, um diese im Funktionsbereich zu berühren.

Im Unterschied zur Figurensequenz der Figuren 6.1 bis 6.3 ist in der Figurensequenz der Figuren 7.1, 7.2 und 7.3 das erfindungsgemäß vorgeschlagene Verfahren näher dargestellt. Auch hier werden Einzellagen 12, 14, 16 durch Perforation 32 einer entsprechenden Außenkontur 46 im ersten Bahnmaterial 74 für die erste Einzellage 12, im zweiten Bahnmaterial 76 für die zweite Einzellage 14 und im dritten Bahnmaterial 78 für die dritte Einzellage 16 erzeugt. Durch die Perforation 32 entstehen zwischen den einzelnen Einzellagen 12, 14, 16 jeweils temporäre Stützstrukturen 52.

Nach dem Perforationsvorgang des ersten Bahnmaterials 74 für die erste Einzellage 12, dem zweiten Bahnmaterial 76 für die zweite Einzellage 14 sowie dem dritten Bahnmaterial 78 für die dritte Einzellage 16, erfolgt ein Trennvorgang 88.

Durch den Trennvorgang 88 werden aus dem ersten Bahnmaterial 74 für die erste Einzellage 12, dem zweiten Bahnmaterial 76 für die zweite Einzellage 14 und dem dritten Bahnmaterial 78 für die dritte Einzellage 16 einzelne Bahnstücke 94 oder Bögen 96 gebildet. Figur 7.2 ist zu entnehmen, dass die jeweils durch den Trennvorgang 88 gebildeten Bahnstücke 94 bzw. Bögen 96 jeweils eine Anzahl erster Einzellagen 12, zweiter Einzellagen 14 oder dritter Einzellagen 16 umfassen, die miteinander durch Perforationsstege 40, die die Sollbruchstellen darstellen, verbunden sind und des Weiteren temporäre Stützstrukturen 52 ausgebildet sind, welche im Vergleich zur Darstellung gemäß Figur 6.2 eine bessere Handhabung der einzelnen Exemplare der Einzellagen 12, 14, 16 bei sich anschließenden Handhabungsprozessen erlauben. Insbesondere kann aufgrund der Ausbildung temporärer Stützstrukturen 52 an den Bahnstücken 94 bzw. den Bögen 96 ein verbesserter Stapelvorgang 90 durchgeführt werden.

Da sich die temporären Stützstrukturen 52 vorwiegend im Längsrandbereich der Bahnstücke 94 bzw. der Bögen 96 befinden, ist deren Entfernung durch einfaches seitliches Abreißen an den Perforationsstegen 44, welche die Sollbruchstellen darstellen, der Perforation 32 problemlos möglich. Aus der Figurensequenz 7.1, 7.2 und 7.3 geht hervor, dass das erforderliche Trennen von Einzellagen 12, 14, 16 aus dem Bahnmaterial 74, 76, 78 durch einen Perforationsprozess unter Ausbildung der Perforation 32 ersetzt ist und die Trennung der durch Perforation 32 erzeugten temporären Stützstrukturen 52 in der Fertigungsprozesskette auf einen möglichst späten Zeitpunkt verschoben ist.

Die Trennung der temporären Stützstrukturen 52 erfolgt nach dem Ende des Stapelvorgangs 90, d.h. zwischen dem Übergang in zeitlicher Hinsicht gesehen von Figur 7.2 auf Figur 7.3. Durch das möglichst spät erfolgende Entfernen, im vorliegenden Falle durch seitliches Abreißen der temporären Stützstrukturen 52, wird die Handhabung der Einzellagen 12, 14, 16, da diese noch zusammenhängen, bis zur vollständigen Trennung, d.h. bis zum Entfernen der temporären Stützstrukturen 52 erheblich vereinfacht. Die vollständige Trennung der einzelnen Exemplare der Einzellagen 12, 14, 16 aus den Bahnstücken 94 bzw. den Bögen 96 erfolgt entweder nur mittels Abreißens des überflüssigen Materials, d.h. der temporären Stützstruktur 52 oder durch Auseinanderziehen zweier Elemente für den Fall, dass es kein überflüssiges Material gibt, vergleiche Darstellung der Figuren 4.1, 4.2, 4.3 bis 4.6.

Da die Perforation 32 kein vollständiges Durchschneiden der Rohmaterialien darstellt, erfolgt dieses in zeitlicher Hinsicht gesehen schneller und mit einer kostengünstigeren Technologie, verglichen mit einem kompletten Durchtrennen durch einen Schneidvorgang des Rohmaterials. Mittels der Perforation 32 ist die Möglichkeit gegeben, an den einzelnen Exemplaren von Einzellagen 12, 14, 16 eines Stapelaufbaus 60 temporäre Stützstrukturen 52 anzubringen. Diese ermöglichen es, beispielsweise filigrane Strukturen wie die eingangs erwähnten Kontaktfahnen 18 bzw. 20 an den Einzellagen 12, 16 zu schützen und somit Beschädigungen bei der Handhabung oder beim Stapelvorgang 90 zu vermeiden. Die temporären Stützstrukturen 52 werden nach Beendigung des Stapelvorganges 90 dank der Perforation 32 einfach abgezogen, ohne dass hierfür eine Schneidoperation erforderlich und ein Schneidgerät in der Prozesskette vorzusehen wäre.

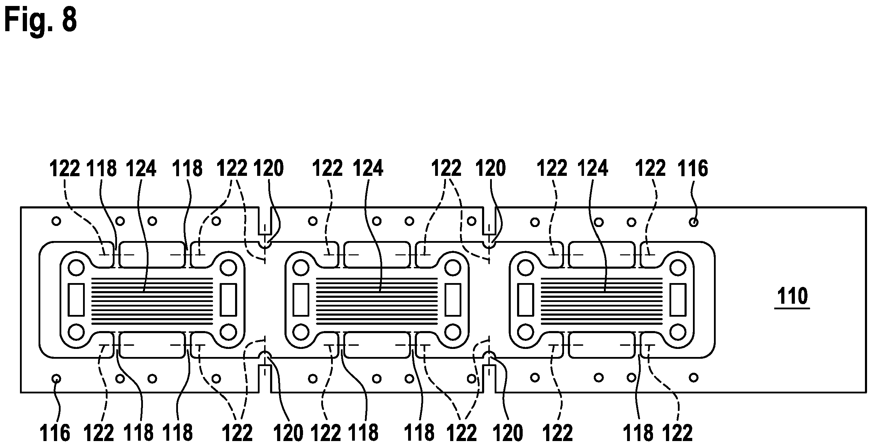

Figur 8 zeigt eine "vorteilhafte Handhabung einer Bipolarplatte"

Figur 8 zeigt, dass ein Bahnmaterial 110, aus dem beispielsweise Bipolarplatten 26 gefertigt werden, in eine Transportrichtung transportiert wird. Das Bahnmaterial 110 hat beispielsweise für Bipolarplatten 26 eine Dicke zwischen 0,1 und 1 mm, für ME's eine Dicke inklusive Trägerfolien zwischen 0,1 mm und 5 mm. Dichtungen haben eine Dicke bis zu 3 mm.

Wie Figur 8 zu entnehmen ist, sind im Bahnmaterial 110 einzelne Funktionsstrukturen 124, die im vorliegenden Falle die Bipolarplatte 26 bilden, ausgeführt. Die einzelnen Funktionsstrukturen 124 sind durch Fixierungsstege 118, d.h. Perforationsstege 40 mit dem Bahnmaterial 110 verbunden. Einzelne Segmente des Bahnmaterials 110 wiederum sind durch Umbiegungsstege 120 miteinander verbunden und bilden das kontinuierlich in Vorschubrichtung geförderte Bahnmaterial 110.

An den Fixierungsstegen 118 sowie den Umbiegungsstegen 120 sind Stegperforationen 122 ausgebildet, welche Sollbruchstellen darstellen, an denen die Funktionsstruktur 124 vom Bahnmaterial 110 getrennt wird. Im Vergleich zur Handhabung folien- oder blattförmigen Materials für die Ausbildung der ersten Einzellagen 12, der zweiten Einzellagen 14, der dritten Einzellagen 16 als Kathode, Separator oder Anode eines Elektrodenstapels 10, weist das Bahnmaterial 110, aus dem die Funktionsstruktur 124 für Bipolarplatten 26 hergestellt wird, eine größere Materialdicke auf. Im in Figur 8 dargestellten Anwendungsbeispiel fungiert der Rand des Bahnmaterials 110 als temporäre Stützstruktur 52. Da die Perforation 32 im Bereich der Fixierungsstege 118 oder der Umbiegungsstege 120 unterschiedlich stark ausgebildet sein kann, lässt sich ein sauberes Umbiegen bei der Verarbeitung des Bahnmaterials 110 erreichen.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Verfahren zur Herstellung eines Stapelaufbaus (60) einer Batteriezelle oder einer Brennstoffzelle aus folien- oder blattförmigen Einzellagen (12, 14, 16), wobei zumindest nachfolgende Verfahrensschritte durchlaufen werden:
a) Erzeugen von Einzellagen (12, 14, 16) mit einer Außenkontur (46) durch Perforation (32) in zumindest einer Perforationsrichtung (34, 36) in einem bahnförmigen Material (74, 76, 78) für jeweils eine der Einzellagen (12, 14, 16),
b₁) Ausführung der Perforation (32) derart, dass als Sollbruchstellen dienende Abrisskanten (50) von Perforationsstegen (40) innerhalb der Außenkontur (46) liegen,
b₂) Ausführung der Perforation (32) derart, dass durch die Perforation temporärer Stützstrukturen (52) zwischen Einzellagen (12, 14, 16) im jeweiligen bahnförmigen Material (74, 76, 78) gebildet werden,
c₁) Abtrennung einzelner, identischer Einzellagen (12, 14, 16) an den innerhalb der Außenkontur (46) der Einzellagen (12, 14, 16) liegenden Sollbruchstellen voneinander
oder
c₂) Abtrennung von Bahnstücken/Bögen (94, 96) aus mehreren identischen, mit temporären Stützstrukturen (52) miteinander verbundener Einzellagen (12, 14, 16),
d) Durchführung eines Stapelvorgangs (90) von Bahnstücken/Bögen (94, 96) und Abtrennen der temporären Stützstrukturen (52) nach Beendigung des Stapelvorganges (90) an der Perforation (32).

2. Verfahren zur Herstellung eines Stapelaufbaus (60) gemäß Anspruch 1, **dadurch gekennzeichnet, dass** die bahnförmigen Materialien (74, 76, 78) im Bereich von Abrisskanten (50) der Perforationsstege (40) mit einer Vorprägung (56) versehen und/oder in lokal verringerter Materialdicke (54) ausgeführt werden.

3. Verfahren zur Herstellung eines Stapelaufbaus (60) gemäß Anspruch 1, **dadurch gekennzeichnet, dass** bei der Trennung einzelner, identischer Einzellagen (12, 14, 16) aus den jeweiligen Bahnmaterialien (74, 76, 78) gemäß Verfahrensschritt c₁) Stegreste (44) der Perforationsstege (40) innerhalb der Außenkontur (46) der jeweiligen Einzellage (12, 14, 16) liegen.

4. Verfahren zur Herstellung eines Stapelaufbaus (60) gemäß Anspruch 1, **dadurch gekennzeichnet, dass** die einzelnen, identischen Einzellagen (12, 14, 16) gemäß Verfahrensschritt c₁) durch Zugkrafteinleitung (57) auseinandergezogen werden.

5. Verfahren zur Herstellung eines Stapelaufbaus (60) gemäß Anspruch 1, **dadurch gekennzeichnet, dass** die temporären Stützstrukturen (52) Kontaktfahnen (18, 20) der Einzellagen (12, 14, 16) umgeben und die Kontaktfahnen (18, 20) gegen Beschädigung bei der Handhabung oder dem Stapelvorgang (90) geschützt werden.

6. Verfahren zur Herstellung eines Stapelaufbaus (60) gemäß Anspruch 1, **dadurch gekennzeichnet, dass** mittels des Stapelaufbaus (60) eine Batteriezelle hergestellt wird, mit einer alternierenden Abfolge erster Einzellagen (12) als Kathoden, zweiter Einzellagen (14) als Separatoren und dritter Einzellagen (16) als Anoden.

7. Verfahren zur Herstellung eines Stapelaufbaus (60) gemäß Anspruch 1, **dadurch gekennzeichnet, dass** mittels des Stapelaufbaus (60) ein Brennstoffzellenstapel (22) mit mindestens einer Bipolarplatte (26), mindestens einer Membran-Elektroden-Einheit (28) und mindestens einer Dichtung (30) hergestellt wird.

8. Verfahren zur Herstellung eines Stapelaufbaus (60) gemäß Anspruch 1, **dadurch gekennzeichnet, dass** bei der Herstellung von Batteriezellen das erste bahnförmige Material (74) für die erste Einzellage (12) ein Kathodenmaterial, das zweite bahnförmige Material (76) für die zweite Einzellage (14) ein Separatormaterial und das dritte bahnförmige Material (76) für die dritte Einzellage (16) ein Anodenmaterial ist.

9. Verfahren zur Herstellung eines Stapelaufbaus (60) gemäß Anspruch 1, **dadurch gekennzeichnet, dass** bei der Herstellung von Brennstoffzellenstapeln (22) das erste bahnförmige Material (74) ein Dichtungsmaterial, das zweite bahnförmige Material (76) ein Bipolarplattenmaterial und das dritte bahnförmige Material (78) ein Material für eine Membran-Elektroden-Einheit (28) ist.

10. Verwendung des Verfahrens gemäß einer der Ansprüche 1 bis 9 zur Herstellung eines Elektrodenstapels (10) für eine Batteriezelle oder zur Herstellung eines Brennstoffzellenstapels (22) für eine Brennstoffzelle.

## Claims

1. Method for producing a stack construction (60) of a battery cell or of a fuel cell comprising film- or sheet-like individual layers (12, 14, 16), wherein at least the following method steps are performed:
a) producing individual layers (12, 14, 16) with an outer contour (46) by perforation (32) in at least one perforation direction (34, 36) in a web-like material (74, 76, 78) for in each case one of the individual layers (12, 14, 16),
b₁) making the perforation (32) in such a way that tear-off edges (50), which serve as predetermined breaking points, of perforation webs (40) are situated within the outer contour (46),
b₂) making the perforation (32) in such a way that temporary supporting structures (52) are formed between individual layers (12, 14, 16) in the respective web-like material (74, 76, 78) by the perforation,
c₁) separating single, identical individual layers (12, 14, 16) from one another at the predetermined breaking points which are situated within the outer contour (46) of the individual layers (12, 14, 16)
or
c₂) separating web pieces/sheets (94, 96) comprising a plurality of identical individual layers (12, 14, 16) which are connected to one another by way of temporary supporting structures (52),
d) carrying out a stacking process (90) of web pieces/sheets (94, 96) and separating the temporary supporting structures (52) after the end of the stacking process (90) at the perforation (32).

2. Method for producing a stack construction (60) according to Claim 1, **characterized in that** the web-like materials (74, 76, 78), in the region of tear-off edges (50) of the perforation webs (40), are provided with a prestamped portion (56) and/or are designed with a locally reduced material thickness (54).

3. Method for producing a stack construction (60) according to Claim 1, **characterized in that** that, when separating single, identical individual layers (12, 14, 16) from the respective web materials (74, 76, 78) in accordance with method step c₁), web remnants (44) of the perforation webs (40) are situated within the outer contour (46) of the respective individual layer (12, 14, 16).

4. Method for producing a stack construction (60) according to Claim 1, **characterized in that** the single, identical individual layers (12, 14, 16) are pulled apart by tensile force introduction (57) in accordance with method step c₁).

5. Method for producing a stack construction (60) according to Claim 1, **characterized in that** the temporary supporting structures (52) surround contact tabs (18, 20) of the individual layers (12, 14, 16), and the contact tabs (18, 20) are protected against damage during handling or the stacking process (90).

6. Method for producing a stack construction (60) according to Claim 1, **characterized in that** a battery cell with an alternating sequence of first individual layers (12) as cathodes, second individual layers (14) as separators and third individual layers (16) as anodes is produced by means of the stack construction (60).

7. Method for producing a stack construction (60) according to Claim 1, **characterized in that** a fuel cell stack (22) with at least one bipolar plate (26), at least one membrane-electrode unit (28) and at least one seal (30) is produced by means of the stack construction (60).

8. Method for producing a stack construction (60) according to Claim 1, **characterized in that**, in the case of the production of battery cells, the first web-like material (74) for the first individual layer (12) is a cathode material, the second web-like material (76) for the second individual layer (14) is a separator material, and the third web-like material (76) for the third individual layer (16) is an anode material.

9. Method for producing a stack construction (60) according to Claim 1, **characterized in that**, in the case of the production of fuel cell stacks (22), the first web-like material (74) is a sealing material, the second web-like material (76) is a bipolar plate material, and the third web-like material (78) is a material for a membrane-electrode unit (28).

10. Use of the method according to any of Claims 1 to 9 for producing an electrode stack (10) for a battery cell or for producing a fuel cell stack (22) for a fuel cell.

## Revendications

1. Procédé de fabrication d'une structure empilée (60) d'une cellule de batterie ou d'une pile à combustible à partir de couches individuelles (12, 14, 16) en forme de feuilles ou de films, au moins les étapes de procédé suivantes étant exécutées :
a) génération de couches individuelles (12, 14, 16) ayant un contour extérieur (46) par perforation (32) dans au moins une direction de perforation (34, 36) dans un matériau en forme de bande (74, 76, 78) pour respectivement l'une des couches individuelles (12, 14, 16),
b₁) réalisation de la perforation (32) de telle sorte que des arêtes de rupture (50) d'éléments jointifs de perforation (40) servant de points de rupture voulus se trouvent à l'intérieur du contour extérieur (46),
b₂) réalisation de la perforation (32) de telle sorte que des structures de soutien temporaires (52) sont formées par la perforation entre des couches individuelles (12, 14, 16) dans le matériau en forme de bande (74, 76, 78) respectif,
c₁) séparation des différentes couches individuelles identiques (12, 14, 16) les unes des autres au niveau des points de rupture voulus situés à l'intérieur du contour extérieur (46) des couches individuelles (12, 14, 16)
ou
c₂) séparation de morceaux de bande/feuilles (94, 96) à partir de plusieurs couches individuelles identiques (12, 14, 16) reliées entre elles par des structures de soutien temporaires (52),
d) réalisation d'une opération d'empilage (90) de morceaux de bande/feuilles (94, 96) et séparation des structures de soutien temporaires (52) après la fin de l'opération d'empilage (90) au niveau de la perforation (32).

2. Procédé de fabrication d'une structure empilée (60) selon la revendication 1, **caractérisé en ce que** les matériaux en forme de bande (74, 76, 78) sont pourvus d'un gaufrage préalable (56) dans la zone des arêtes de rupture (50) des éléments jointifs de perforation (40) et/ou sont réalisés avec une épaisseur de matériau (54) localement réduite.

3. Procédé de fabrication d'une structure empilée (60) selon la revendication 1, **caractérisé en ce que** lors de la séparation de différentes couches individuelles (12, 14, 16) identiques à partir des matériaux en bande (74, 76, 78) respectifs selon l'étape c₁) de procédé, des résidus (44) d'élément jointif des éléments jointifs de perforation (40) se trouvent à l'intérieur du contour extérieur (46) de la couche individuelle (12, 14, 16) respective.

4. Procédé de fabrication d'une structure empilée (60) selon la revendication 1, **caractérisé en ce que** les différentes couches individuelles (12, 14, 16) identiques sont écartées les unes des autres selon l'étape c₁) de procédé par application d'une force de traction (57).

5. Procédé de fabrication d'une structure empilée (60) selon la revendication 1, **caractérisé en ce que** les structures de soutien temporaires (52) entourent des languettes de contact (18, 20) des couches individuelles (12, 14, 16) et les languettes de contact (18, 20) sont protégées contre les dommages lors de la manipulation ou de l'opération d'empilage (90).

6. Procédé de fabrication d'une structure empilée (60) selon la revendication 1, **caractérisé en ce qu'**une cellule de batterie est fabriquée au moyen de la structure empilée (60), avec une succession alternée de premières couches individuelles (12) en tant que cathodes, de deuxièmes couches individuelles (14) en tant que séparateurs et de troisièmes couches individuelles (16) en tant qu'anodes.

7. Procédé de fabrication d'une structure empilée (60) selon la revendication 1, **caractérisé en ce qu'**un empilement de piles à combustible (22) comprenant au moins une plaque bipolaire (26), au moins un assemblage membrane-électrodes (28) et au moins un joint d'étanchéité (30) est fabriqué au moyen de la structure empilée (60).

8. Procédé de fabrication d'une structure empilée (60) selon la revendication 1, **caractérisé en ce que**, lors de la fabrication de cellules de batterie, le premier matériau en forme de bande (74) pour la première couche individuelle (12) est un matériau de cathode, le deuxième matériau en forme de bande (76) pour la deuxième couche individuelle (14) est un matériau de séparateur et le troisième matériau en forme de bande (76) pour la troisième couche individuelle (16) est un matériau d'anode.

9. Procédé de fabrication d'une structure empilée (60) selon la revendication 1, **caractérisé en ce que**, lors de la fabrication d'empilements de piles à combustible (22), le premier matériau en forme de bande (74) est un matériau d'étanchéité, le deuxième matériau en forme de bande (76) est un matériau de plaque bipolaire et le troisième matériau en forme de bande (78) est un matériau pour un assemblage membrane-électrodes (28).

10. Utilisation du procédé selon l'une des revendications 1 à 9 pour la fabrication d'un empilement d'électrodes (10) pour une cellule de batterie ou pour la fabrication d'un empilement de piles à combustible (22) pour une pile à combustible.
